# EUROPÄISCHE PATENTSCHRIFT

(11) **EP 1 528 988 B1**
(45) Veröffentlichungstag und Bekanntmachung des Hinweises auf die Patenterteilung: **04.10.2006**
(21) Anmeldenummer: 03784105.3
(22) Anmeldetag: 29.07.2003
(51) Int. Cl.: B60C 23/04

(54) **VERFAHREN ZUR ZUORDNUNG VON RÄDERN EINES KRAFTFAHRZEUGS ZU DER JEWEILIGEN FAHRZEUGACHSE**
METHOD FOR ASSIGNING WHEELS OF A MOTOR VEHICLE TO THE RESPECTIVE VEHICLE AXLE
PROCEDE POUR ASSOCIER DES ROUES D'UNE AUTOMOBILE A CHAQUE ESSIEU

(30) Priorität: 02.08.2002 DE 10235625
(43) Veröffentlichungstag der Anmeldung: 11.05.2005
(73) Patentinhaber: Continental Teves AG & Co. oHG, 60488 Frankfurt am Main (DE)
(72) Erfinder: GRONAU, Ralph, 35083 Wetter (DE); SÄGER, Peter, 61381 Friedrichrichsdorf (DE); LEISE, Dirk, 65428 Rüsselsheim (DE)
(86) Internationale Anmeldenummer: PCT/EP2003/008364
(87) Internationale Veröffentlichungsnummer: WO 2004/014669

(56) Entgegenhaltungen:
- WO-A1-03/086787
- DE-A- 19 951 273
- US-B1- 6 278 363

## Beschreibung

Die Erfindung betrifft ein Verfahren gemäß Oberbegriff von Anspruch 1.

Derartige Reifenluftdrucküberwachungseinrichtungen werden insbesondere für die Messung des Reifenluftdrucks von Kraftfahrzeugrädern verwendet. Ein falscher Reifenluftdruck führt zu unnötig hohem Reifenverschleiß und höherem Kraftstoffverbrauch. Weiterhin kann der Reifen aufgrund erhöhter Walkarbeit, insbesondere bei zu niedrigem Reifenluftdruck, vorgeschädigt bzw. plötzlich zerstört werden, was zu schweren Verkehrsunfällen führen kann.

Aus der DE 4205911 A1 ist eine Überwachungsvorrichtung für den Luftdruck von luftbereiften Fahrzeugrädern bekannt. Allerdings ist die dort vorgestellte Realisierung sehr aufwendig. Eine genannte Ausführungsform weist pro Sender im Rad einen zugehörigen Empfänger am Fahrzeug auf, eine andere Ausführungsform basiert auf einer kombinierten Sende-/Empfangseinheit im Rad und einem oder mehreren Empfangseinheiten am Fahrzeug. Die Zuordnung der einzelnen Räder zu den Einbauorten erfolgt über einen sogenannten Paarungsprozess, der entweder manuell oder automatisch vorgenommen wird. Der manuelle Paarungsprozess ist hierbei sehr zeit- und arbeitsintensiv und kann bei einer fehlerhaften Bedienung zu einer falschen Zuordnung der einzelnen Räder zu den Einbauorten führen. Bei dem automatischen Paarungsprozess ist eine fehlerfreie Zuordnung der einzelnen Räder zu den Einbauorten möglich, allerdings ist der notwendige technische Aufwand sehr hoch und damit teuer.

Ferner ist aus der WO 02/072369 A1 ein Verfahren zur Bestimmung der Montageorte (Rad vorne links, Rad hinten rechts, etc.) der Fahrzeugräder bekannt. Das in dieser Schrift genannte Verfahren basiert auf einer Messung der Fahrzeugradtemperaturen, wobei eine Zuordnung der Fahrzeugräder zu dem jeweiligen Montageort über die Auswertung der Fahrzeugradtemperaturen in Abhängigkeit von speziellen detektierenden Fahrmanövern erfolgt. Hierbei werden die Räder, welche die höchsten Temperaturwerte aufweisen der angetriebenen Achse zugeordnet. Diese Zuordnung ist jedoch nicht korrekt, da die Temperaturerhöhung der Räder hauptsächlich von der fahrzeugspezifischen Achsbelastung und nicht von der angetriebenen Achse abhängig ist.

Die gattugsgemäße DE 199 51 273 A1 offenbart ein Verfahren zur Zuordnung von Rädern eines Kraftfahrzeugs zu der jeweiligen Fahrzeugachse, wobei die Räder jeweils einen Luftreifen aufweisen, deren Reifenluftdrücke durch eine Reifenluftdrucküberwachungseinrichtung überwacht werden, die ein Sendemodul in jedem Rad, sowie am der im Fahrzeug angeordnete Empfangsmodule und ein Auswertemodul aufweist, wobei jedes Sendemodul eine Reifendruckinformation und eine radindividuelle Identifikationsnummer an die Empfangsmodule sendet, die einem Auswerteprozess in dem Auswertemodul zugeführt werden, wobei zur Zuordnung die Reifenluftdruckänderungen bei mindestens zwei unterschiedlichen fahrdynamischen Zuständen der Räder betrachtet werden, und wobei wenigstens ein Fahrzustandsparameter sensorisch erfasst wird, oder einzunehmende fahrdynamische Fahrzustände dem Benutzer vorgegeben werden, welche durch den Benutzer nach einnehmen dieser vorgegebenen Zustände mittels einer Eingabevorrichtung bestätigt werden müssen.

In US 6,278,363 B1 ist ein Verfahren und ein System zur Reifendrucküberwachung beschrieben. Zur Zuordnung der Räder wird ein Fahrzustandssensor verwendet. Dieser ist beispielsweise als Drehrichtungserkennungssensor ausgeführt, welcher je nach Drehrichtung einen elektrischen Kontakt zwischen zwei von drei Kontaktpunkten herstellt. Durch die Drehrichtungserkennungssensoren wird erkannt, ob sich ein Rad an der linken oder an der rechten Fahrzeugseite befindet. Darüber hinaus werden drei Methoden vorgestellt, wie ein vorderes von einem hinteren Rad unterschieden werden kann. Die erste Methode erkennt dies über eine Straßenstörung, welche sich üblicherweise zuerst auf ein vorderes und nach einer gewissen Zeit auf ein hinteres Rad auswirkt. Da der Achsabstand zwischen den vorderen und hinteren Rädern im wesentlichen gleich bleibt, kann unter Berücksichtigung der Fahrzeuggeschwindigkeit ein Zeitpunkt/Zeitbereich festgelegt werden, in welchem eine Straßenstörung am Vorderrad sich auf das Hinterrad auswirken müsste. Wird also eine Straßenstörung an einem Vorderrad und innerhalb eines erwarteten Zeitbereichs am Hinterrad erkannt, so erfolgt eine Zuordnung der Räder zu den Fahrzeugachsen. Die zweite Methode basiert auf einer Auswertung einer starken Fahrzeugbremsung, da sich durch eine Bremsung die Vorderräder stärker belastet werden als die Hinterräder. Hierzu ist es aber notwendig, eine Bremsung beispielsweise durch Auswertung des Bremspedals o. ä. zu erkennen. Bei der dritten Methode werden Querbeschleunigungssensoren in allen Reifenmodulen verwendet. Da die Vorderräder gelenkt werden, weisen diese höhere Querbeschleunigungen als die Hinterräder auf.

Aus WO 03/086787 A1 ist eine Reifenstatusüberwachungseinrichtung bekannt. Hierbei können die Radpositionen über eine Auswertung der Sendefeldstärken der Reifenmodule zugeordnet werden. Weiterhin können über Sensoren, z. B. Geschwindigkeitssensoren, Lenkwinkelsensoren, etc., Fahrzustände (Kurvenfahrt, Fahrzeugbeschleunigung, Fahrzeugverzögerung, etc.) erkannt werden, welche eine Zuordnung der Räder ermöglicht.

Daher ist es die Aufgabe der Erfindung ein Verfahren bereitzustellen, welches unter Berücksichtigung der fahrzeugspezifischen Achsbelastung auf einfache Weise eine selbsttätige Zuordnung der Räder zu den Fahrzeugachsen ermöglicht.

Diese Aufgabe wird erfindungsgemäß durch ein Verfahren nach Anspruch 1 gelöst.

Das erfindungsgemäße Verfahren basiert auf der Kenntnis der fahrzeugspezifischen Achsbelastung. Aufgrund dieser fahrzeugspezifischen Achsbelastung ist z. B. im Auswerteprozess eine Information abgelegt, welche Fahrzeugachse, Vorder- oder Hinterachse, als die konstruktiv höher belastete Achse festgelegt ist. Das erfindungsgemäße Verfahren ermittelt die Räder, welche die höchsten Reifenluftdruckänderungen aller Räder aufweisen. Die höchsten Reifenluftdruckänderungen treten hierbei erfahrungsgemäß an den am höchsten belasteten Rädern auf, wobei sich die am höchsten belasteten Räder an der am höchsten belasteten Fahrzeugachse befinden. Hierdurch ist eine Zuordnung der am höchsten belasteten Räder zu der am höchsten belasteten Fahrzeugachse, und, unter Kenntnis der fahrzeugspezifischen Achsbelastung, eine Zuordnung der Räder zu den betreffenden Fahrzeugachsen, Vorder- oder Hinterachse gegeben.

Gemäß der Erfindung wird unter der fahrzeugspezifischen Achsbelastung im wesentlichen die statische und dynamische Achslastverteilung des betreffenden Fahrzeugs verstanden. Die statische Achslastverteilung beschreibt hierbei die rein statische Gewichtsbelastung der betreffenden Achse z. B. hervorgerufen durch die Einbaulage des Motors oder durch die Beladung des Fahrzeugs. Die dynamische Achslastverteilung beschreibt z. B. die Auswirkungen eines Bremsvorgangs oder den Einfluss von aerodynamischen Maßnahmen (Spoiler) auf die Achslastverteilung.

Die Reifenluftdrücke der einzelnen Räder werden vorzugsweise über einen festgelegten, sich zyklisch wiederholenden Zeitraum miteinander verglichen, wobei der Zeitraum insbesondere im Bereich von etwa 50 bis etwa 900 Sekunden liegt.

Eine vorteilhafte Weiterbildung des Verfahrens sieht vor, dass die zwei Identifikationsnummern der Räder mit den höchsten Reifenluftdruckänderungen, im Vergleich zu den Reifenluftdruckänderungen aller Räder, in einem Speicher abgelegt werden.

Bei einer weiteren vorteilhaften Ausgestaltung des Verfahrens werden die Identifikationsnummern mit den höchsten Reifendruckänderungen, die aus einem nachfolgenden Zeitraum gewonnen werden, mit den bereits in dem Speicher abgelegten Identifikationsnummern verglichen.

Dabei ist es zweckmäßig, dass der Speicherinhalt des Speichers erhalten bleibt, und ein Zählerstand eines Zählers um eins erhöht wird, wenn die bereits im Speicher abgelegten Identifikationsnummern mit dem aus einem nachfolgenden Zeitraum gewonnenen Identifikationsnummern übereinstimmen.

Eine andere vorteilhafte Ausgestaltung des Verfahrens sieht vor, dass bei Erreichen eines festlegbaren Schwellwerts des Zählerstandes eine Zuordnung der zwei Räder deren Identifikationsnummern in dem Speicher abgelegt sind zu der als höher belasteten angesehenen Fahrzeugachse erfolgt.

Der festlegbare Schwellwert liegt dabei vorzugsweise im Bereich von etwa 20 bis etwa 100.

In einer weiteren vorteilhaften Ausführungsform des Verfahrens ist vorgesehen, dass in dem Auswertemodul eine Information abgelegt ist, welche Fahrzeugachse als die höher belastete Achse angesehen wird.

Weiterhin ist es vorteilhaft, dass das Sendemodul erst ab einer vorgebbaren Radgeschwindigkeit Reifenluftdruckinformationen aussendet.

Weitere Einzelheiten, Merkmale und Vorteile des erfindungsgemäßen Verfahrens gehen aus der nachfolgenden Beschreibung von Ausführungsbeispielen anhand zweier Zeichnungen hervor. Es zeigen:
- Fig. 1: einen schematischen Aufbau eines Fahrzeugs mit einer Reifenluftdrucküberwachungseinrichtung
- Fig. 2: ein Flussdiagramm zur Veranschaulichung eines Beispiels des Verfahrens

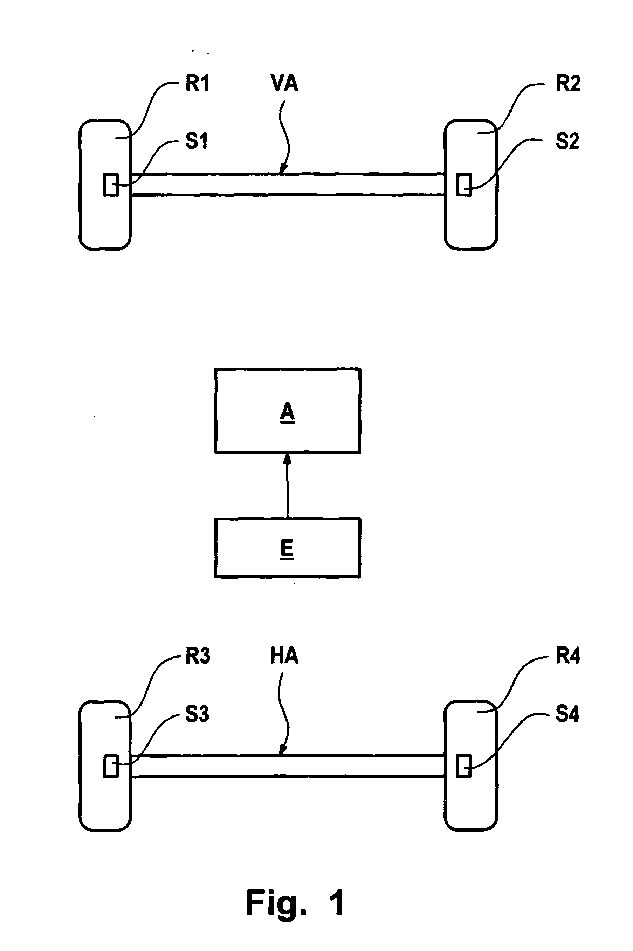

Fig. 1 stellt schematisch ein Fahrzeug mit vier luftgefüllten Rädern R1 bis R4 dar, die sich an einer Vorderachse VA und einer Hinterachse HA befinden. Weiterhin befindet sich an jedem Rad R1 bis R4 ein Sendemodul S1 bis S4. Diese Sendemodule S1 bis S4 weisen Batterien auf, welche die Sendemodule S1 bis S4 mit Energie versorgen. Weiterhin können sogenannte Rollschalter in den Sendemodulen S1 bis S4 vorgesehen sein, die erst ab einer einstellbaren Radgeschwindigkeit einen Kontakt zwischen den Batterien und den Sendemodulen S1 bis S4 ermöglichen. Durch diese Rollschalter wird eine längere Lebensdauer der Batterien erreicht, da keine permanente Energieversorgung der Sendemodule erfolgt. Die Sendemodule S1 bis S4 weisen weiterhin Messeinrichtungen auf, die den Reifenluftdruck der einzelnen Räder R1 bis R4 ermitteln. Des weiteren verfügt jedes Sendemodul S1 bis S4 über eine individuelle Identifikationsnummer. Diese Identifikationsnummer wird zusammen mit dem jeweiligen Reifenluftdruck an das Empfangsmodul E gesendet. Vorzugsweise erfolgt dies per Funkübertragung. Das Empfangsmodul E übermittelt die empfangenen Daten an ein Auswertemodul A. Dem Auswertemodul A kann eine Anzeige nachgeschaltet sein, die dem Fahrzeugführer z. B. in einem Display Auskunft über den Reifenluftdruck der Räder R1 bis R4 gibt.

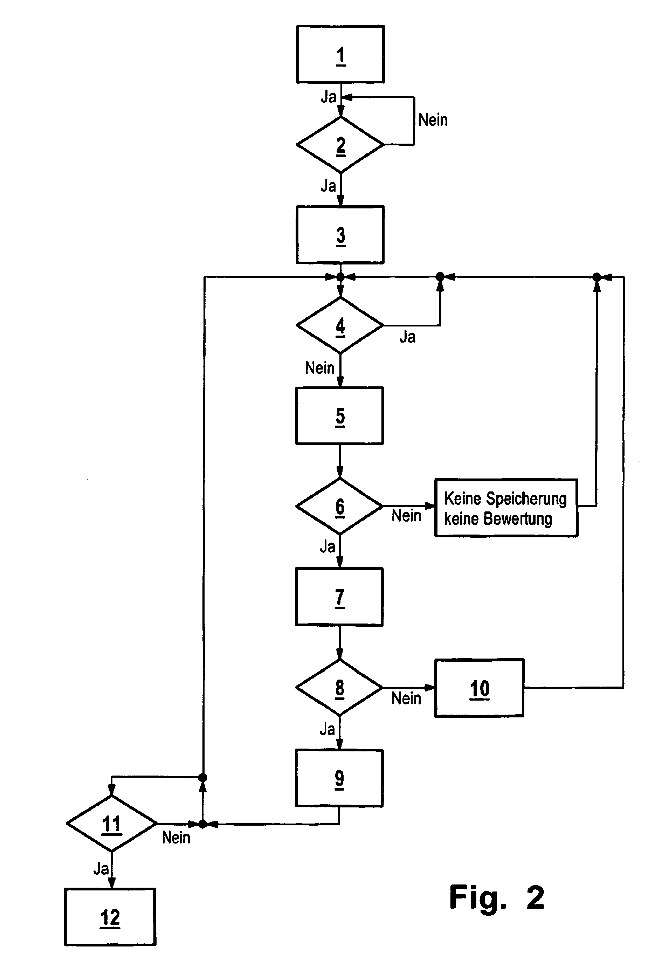

In Fig. 2 ist ein Flussdiagramm dargestellt, welches die Funktion des Verfahrens verdeutlicht. Nach dem Einschalten der Zündung 1 und dem Erreichen einer Radgeschwindigkeit, die ausreicht um den Rollschalter 2 zu schließen, erfolgt das Senden 3 der Reifenluftdruckinformationen und der Identifikationsnummern von den einzelnen Sendemodulen S1 bis S4 an das Empfangsmodul E. Das Empfangsmodul E führt die empfangenen Daten dem Auswerteprozess zu. In einem Schritt 4 werden über einen sich zyklisch wiederholenden Zeitraum, vorzugsweise im Bereich von etwa 50 bis etwa 900 Sekunden, die einzelnen Reifenluftdrücke der Räder auf eine Druckänderung hin verglichen. Hierbei wird ermittelt, ob sich der Reifenluftdruck eines einzelnen Rades innerhalb des Zeitraums geändert hat. Solange sich der Reifenluftdruck auch nur eines einzigen Rades verändert, wird diese Routine nicht verlassen. Weist kein Rad mehr eine Druckänderung auf, so ist eine sogenannte Beharrungsphase 5 erkannt. Diese Beharrungsphase 5 beschreibt eine nahezu konstante Fahrsituation, wie z. B. eine Fahrt mit einer relativ konstanten Geschwindigkeit. Ist diese Beharrungsphase 5 erkannt, erfolgt ein Reifenluftdruckvergleich 6 der einzelnen Räder untereinander.
Vorzugsweise wird hierbei nicht der Absolutdruck der Räder verglichen, sondern eine Druckdifferenz zwischen z. B. einem aktuellen Reifenluftdruckwert eines Rades und einem vorher gesandten Reifenluftdruckwert desselben Rades. Diese Druckdifferenz ermöglicht einen Rückschluss darauf, ob sich ein Rad an einer höher oder niedriger belasteten Fahrzeugachse befindet. Bei einer höher belasteten Achse, und damit höher belasteten Rädern an dieser Achse, steigt die Temperatur dieser Räder aufgrund der Belastung. Durch diese Erwärmung erhöht sich auch der Reifenluftdruck.
Dem Auswerteprozess wird eine fahrzeugspezifische Information zugeführt, woraus ersichtlich ist, welche Achse des betreffenden Fahrzeugs als die konstruktiv höher belastete Achse angesehen wird, so dass daraus eine Zuordnung der höher belasteten Räder zu der als konstruktiv höher belastet angesehenen Achsen erfolgt. Hierbei kann die fahrzeugspezifische Information z. B. in einem Speicher abgelegt sein. Bei dem Vergleich der Druckdifferenzen der einzelnen Räder untereinander wird zuerst durch den Auswerteprozess festgestellt, ob die Druckdifferenzen bei allen Rädern gleich bzw. sehr ähnlich sind. Ist dies der Fall, so wird keine Speicherung und keine Bewertung der Druckdifferenzen durchgeführt, und der Auswerteprozess startet wieder bei dem ersten Schritt 4.
Sind die Druckdifferenzen der Räder zueinander verschieden, so erfolgt eine Speicherung 7, wobei die, bei einem vierrädrigen Fahrzeug, zwei Identifikationsnummern der Räder mit den höchsten Druckdifferenzwerten in den Überwachungszyklen in einen Speicher geschrieben werden. Alternativ können selbstverständlich auch die Identifikationsnummern der zwei Räder mit den niedrigsten Druckdifferenzwerten in den Speicher geschrieben werden.
In einem folgenden Schritt 8 erfolgt ein Vergleich zwischen den bereits in dem Speicher abgelegten Identifikationsnummern und neuen, aus einem folgenden Zyklus bestimmten Identifikationsnummern. Stimmen die bereits gespeicherten Identifikationsnummern mit den neu bestimmten Identifikationsnummern überein, so bleibt in einem ersten Fall 9 der Speicherinhalt erhalten, und ein Zählerstand eines Zählers wird um eins erhöht. Stimmen die neu bestimmten Identifikationsnummern mit den bereits im Speicher abgelegten Identifikationsnummern nicht überein, so wird in einem zweiten Fall 10 der Speicherinhalt mit den neuen Identifikationsnummern überschrieben und der Zählerstand um eins erniedrigt, wobei der Zählerstand nur positive Werte aufweist. Die Erhöhung bzw. die Erniedrigung des Zählerstandes um eins soll hier nur als eine Ausführungsmöglichkeit genannt sein. Selbstverständlich kann der Zähler auch eine Hysterese aufweisen oder der Zähler kann resetiert werden. In beiden Fällen 9,10 erfolgt eine Rückkehr zum Schritt 4 und damit ein erneuter Durchlauf des Auswerteprozesses. Anschließend erfolgt eine Abfrage 11 des Zählerstandes. Durch einen Vergleich wird ermittelt, ob der Zählerstand einen vorgebbaren Schwellwert, vorzugsweise im Bereich von etwa 20 bis etwa 100, überschritten hat. Ist dies der Fall, so erfolgt eine Zuordnung 12, wobei die Räder R1 bis R4, deren Identifikationsnummern in dem Speicher abgelegt sind der als höher belastet angesehenen Achse, bzw. der als niedriger belastet angesehenen Achse, zugeordnet werden. Durch die vorher abgelegte Information, welche Achse des betrachteten Fahrzeugs als die höher belastete Achse, bzw. als die niedriger belastete Achse angesehen wird, kann nun der Auswerteprozess zwei Räder entweder der Vorder- oder der Hinterachse zuordnen, wobei somit auch zwangsläufig die Zuordnung der übrigen zwei Räder zu der übrigen Fahrzeugachse erfolgt. Der Speicherinhalt des Speichers sowie der Zählerstand bleiben auch nach Abschalten der Zündung erhalten. Erfolgt z. B. ein Reifenwechsel, wobei die Räder nicht mehr an der Fahrzeugachse montiert sind an der sie ursprünglich montiert waren, so erkennt dies der Auswerteprozess daran, dass die ab dem Reifenwechsel gesendeten Identifikationsnummern nicht mehr mit dem Speicherinhalt übereinstimmen. Über mehrere Zeiträume wird der Speicherinhalt des Speichers mit den aktuell vorliegenden Identifikationsnummern überschrieben und der Zählerstand jeweils um eins erhöht, bis der Schwellwert überschritten wird, wodurch eine neue Zuordnung der Räder R1 bis R4 zu den betreffenden Achsen erfolgt.

## Patentansprüche

1. Verfahren zur Zuordnung von Rädern eines Kraftfahrzeugs zu der jeweiligen Fahrzeugachse (VA, HA), wobei die Räder(R1 bis R4) jeweils einen Luftreifen aufweisen, deren Reifenluftdrücke durch eine Reifenluftdrucküberwachungseinrichtung überwacht werden, die mindestens ein Sendemodul (S1 bis S4') in jedem Rad (R1 bis R4), sowie mindestens ein am oder im Fahrzeug angeordnetes Empfangsmodul (E) und ein Auswertemodul (A) aufweist, wobei jedes Sendemodul (S1 bis S4) eine Reifenluftdruckinformation und eine radindividuelle Identifikationsnummer an das Empfangsmodul (E) sendet, die einem Auswerteprozess in dem Auswertemodul (A) zugeführt werden, wobei zur Zuordnung die Reifenluftdruckänderungen der Räder (R1 bis R4) betrachtet werden, **dadurch gekennzeichnet, dass** die Räder (R1 bis R4) mit nahezu identischen Reifenluftdruckänderungen unter Berücksichtigung einer fahrzeugspezifischen Achsbelastung einer Fahrzeugachse (VA, HA) zugeordnet werden.

2. Verfahren nach Anspruch 1, **dadurch gekennzeichnet, dass** die Reifenluftdrücke der einzelnen Räder (R1 bis R4) über einen festgelegten, sich zyklisch wiederholenden Zeitraum, vorzugsweise im Bereich von etwa 50 bis etwa 900 Sekunden, auf nahezu konstante Reifenluftdrücke der einzelnen Räder (R1 bis R4) miteinander verglichen werden.

3. Verfahren nach Anspruch 1 oder 2, **dadurch gekennzeichnet, dass** die zwei Identifikationsnummern der Räder (R1 bis R4) mit den höchsten Reifenluftdruckänderungen, im Vergleich zu den Reifenluftdruckänderungen aller Räder (R1 bis R4), in einem Speicher abgelegt werden.

4. Verfahren nach Anspruch 3, **dadurch gekennzeichnet, dass** die Identifikationsnummern der Räder (R1 bis R4) mit den höchsten Reifenluftdruckänderungen, die aus einem nachfolgenden Zeitraum gewonnen werden, mit den bereits in dem Speicher abgelegten Identifikationsnummern verglichen werden.

5. Verfahren nach Anspruch 4, **dadurch gekennzeichnet, dass** der Speicherinhalt des Speichers erhalten bleibt, und ein Zählerstand eines Zählers um eins erhöht wird, wenn die bereits im Speicher abgelegten Identifikationsnummern mit den aus einem nachfolgenden Zeitraum gewonnenen Identifikationsnummern übereinstimmen.

6. Verfahren nach Anspruch 5, **dadurch gekennzeichnet, dass** bei Erreichen eines festlegbaren Schwellwertes des Zählerstandes eine Zuordnung der zwei Räder deren Identifikationsnummern in dem Speicher abgelegt sind zu der als höher belastet angesehenen Fahrzeugachse (VA, HA) erfolgt.

7. Verfahren nach Anspruch 6, **dadurch gekennzeichnet, dass** der festlegbare Schwellwert im Bereich von etwa 20 bis etwa 100 liegt.

8. Verfahren nach Anspruch 6, **dadurch gekennzeichnet, dass** in dem Auswertemodul eine Information darüber abgelegt ist, welche Fahrzeugachse (VA, HA) als die höher belastete Achse angesehen wird.

9. Verfahren nach Anspruch 1, **dadurch gekennzeichnet, dass** das Sendemodul erst ab einer vorgebbaren Radgeschwindigkeit Reifenluftdruckinformationen aussendet.

## Claims

1. Method for allocating wheels of a motor vehicle to the respective vehicle axle (VA, HA), said wheels (R1 to R4) including an inflation tire each, whose tire pressures are monitored by a tire pressure monitoring device including at least one transmitting module (S1 to S4) in each wheel (R1 to R4), and at least one receiving module (E) arranged at or in the vehicle and one evaluation module (A), with each transmitting module (S1 to S4) transmitting tire pressure information and a wheel-specific identification number to the receiving module (E), which are sent to an evaluation process in the evaluation module (A), wherein the tire pressure changes of the wheels (R1 to R4) are considered for the allocation,
**characterized in that** the wheels (R1 to R4) having almost identical tire pressure changes are allocated to one vehicle axle (VA, HA) by taking into account a vehicle-specific axle load.

2. Method as claimed in claim 1,
**characterized in that** the tire inflation pressures of the individual wheels (R1 to R4) are compared with each other with respect to almost constant tire pressures of the individual wheels (R1 to R4) over a defined, cyclically recurrent period of time, said period of time especially ranging from roughly 50 to roughly 900 seconds.

3. Method as claimed in claim 1 or 2,
**characterized in that** the two identification numbers of the wheels (R1 to R4) with the greatest tire pressure changes, compared to the tire pressure changes of all wheels (R1 to R4), are stored in a memory.

4. Method as claimed in claim 3,
**characterized in that** the identification numbers of the wheels (R1 to R4) with the greatest tire pressure changes, being obtained in a subsequent period of time, are compared with the identification numbers already stored in the memory.

5. Method as claimed in claim 4,
**characterized in that** the contents of the memory is preserved, and a count of a counter is increased by one when the identification numbers already stored in the memory are identical with the identification numbers obtained in a subsequent period of time.

6. Method as claimed in claim 5,
**characterized in that** when a determinable threshold value of the counter's count is reached, the two wheels having their identification numbers stored in the memory are allocated to the vehicle axle (VA, HA) that is considered as being subjected to higher load.

7. Method as claimed in claim 6,
**characterized in that** the determinable threshold value is in the range of roughly 20 to roughly 100.

8. Method as claimed in claim 6,
**characterized in that** information is stored in the evaluation module indicating which vehicle axle (VA, HA) is considered as the axle subjected to higher load.

9. Method as claimed in claim 1,
**characterized in that** the transmitting module transmits tire pressure information only starting from a predefinable wheel speed.

## Revendications

1. Procédé d'affectation des roues d'un véhicule automobile à l'essieu de véhicule (VA, HA) respectif, dans lequel les roues (R1 à R4) comportent chacune un pneumatique dont les pressions d'air sont contrôlées par un dispositif de contrôle de pression des pneus, qui comporte au moins un module d'émission (S1 à S4') dans chaque roue (R1 à R4), ainsi qu'au moins un module de réception (E) disposé sur ou dans le véhicule et un module d'exploitation (A), dans lequel chaque module d'émission (S1 à S4) émet une information relative à la pression des pneus et un numéro d'identification individuel des roues au module de réception (E), laquelle information est envoyée à un processus d'exploitation dans le module d'exploitation (A), dans lequel pour l'affectation on considère les variations de la pression des pneus des roues (R1 à R4), **caractérisé en ce que** les roues (R1 à R4) sont affectées à un essieu de véhicule (VA, HA) avec des variations à peu près identiques de la pression des pneus en tenant compte d'une charge sur essieu spécifique du véhicule.

2. Procédé selon la revendication 1, **caractérisé en ce que** les pressions des pneus des différentes roues (R1 à R4) sont comparées les unes aux autres pendant une période définie se répétant cycliquement, de préférence comprise entre environ 50 et environ 900 secondes, quant aux pressions à peu près constantes des pneus des différentes roues (R1 à R4).

3. Procédé selon la revendication 1 ou 2, **caractérisé en ce que** les deux numéros d'identification des roues (R1 à R4) dont les variations de la pression des pneus sont maximales, par comparaison aux variations de la pression des pneus de toutes les roues (R1 à R4) sont enregistrés dans une mémoire.

4. Procédé selon la revendication 3, **caractérisé en ce que** les numéros d'identification des roues (R1 à R4) avec les variations maximales de la pression des pneus, qui sont obtenues à partir d'une période suivante, sont comparés aux numéros d'identification déjà enregistrés dans la mémoire.

5. Procédé selon la revendication 4, **caractérisé en ce que** le contenu de la mémoire est maintenu, et les chiffres d'un compteur sont augmentés de un si les numéros d'identification déjà enregistrés dans la mémoire coïncident avec les numéros d'identification obtenus à partir d'une période suivante.

6. Procédé selon la revendication 5, **caractérisé en ce que** lorsqu'est atteinte une valeur de seuil à fixer des chiffres du compteur, il se produit une affectation des deux roues dont les numéros d'identification sont enregistrés dans la mémoire, à l'essieu du véhicule (VA, HA) considéré comme plus chargé.

7. Procédé selon la revendication 6, **caractérisé en ce que** la valeur de seuil à fixer se situe entre environ 20 et environ 100.

8. Procédé selon la revendication 6, **caractérisé en ce que** dans le module d'exploitation est enregistrée une information relative à l'essieu de véhicule (VA, HA) qui est considéré comme plus chargé.

9. Procédé selon la revendication 1, **caractérisé en ce que** le module d'émission n'émet des informations relatives à la pression des pneus qu'à partir d'une vitesse des roues à prédéfinir.
